# EUROPEAN PATENT SPECIFICATION

(11) **EP 3 689 722 B1**
(45) Date of publication and mention of the grant of the patent: **11.01.2023**
(21) Application number: 18862314.4
(22) Date of filing: 05.07.2018
(51) Int. Cl.: B62J 6/055, B62J 6/026, F21S 41/20, F21S 41/148, F21S 43/15, B60Q 1/04, B62J 6/26, B62J 17/02

(54) **COMBINATION LIGHT**
KOMBINATIONSLEUCHTE
LUMIÈRE COMBINÉE

(30) Priority: 29.09.2017 JP 2017192199
(43) Date of publication of application: 05.08.2020
(73) Proprietor: Honda Motor Co., Ltd., Tokyo 107-8556 (JP)
(72) Inventor: KOGO Satoshi, Wako-shi Saitama 351-0193 (JP)
(74) Representative: Kiwit, Benedikt
(86) International application number: PCT/JP2018/025454
(87) International publication number: WO 2019/064797

(56) References cited:
- WO-A1-2012/120947
- JP-A- 2009 046 087
- JP-A- 2013 193 642
- JP-A- 2017 109 672
- US-A1- 2008 225 535

## Description

### Technical Field

The present invention relates to a combination light including: a main lamp body; and auxiliary lamp bodies disposed to left and right of the main lamp body.

### Background Art

JP 2004 - 322 827 A discloses a combination light having blinkers (auxiliary lamp bodies) disposed to left and right of a headlight (a main lamp body). US 2008 / 225 535 A1 discloses a combination light for a saddle-type vehicle including: a main lamp body; and auxiliary lamp bodies disposed to left and right of the main lamp body, the main lamp body including a plurality of main-lamp-body light sources which are configured to emit a light that is irradiated outside, and the left and right auxiliary lamp bodies each including an auxiliary-lamp-body light source which is configured to emit a light that is irradiated outside, the combination light further including:a housing that houses the main-lamp-body light sources and the left and right auxiliary-lamp-body light sources;a reflector section that is housed in the housing and forwardly reflects each of the lights that have been emitted from the main-lamp-body light sources and the left and right auxiliary-lamp-body light sources;a lens section that is attached to a front of the housing and allows each of the lights that have been reflected by the reflector section to be forwardly transmitted;a cover section that is nontransparent or has low transparency with respect to each of the lights that have been reflected by the reflector section, and comprising two partitioning sections that partition the lens section into: a main-lamp-body lamplight surface by which the light of the main-lamp-body light sources is forwardly irradiated from a central portion of the lens section; and left and right auxiliary-lamp-body lamplight surfaces by which the lights of the left and right auxiliary-lamp-body light sources are forwardly irradiated from both left and right parts of the lens section; andtwo substrates that are housed in the housing and extend out in a front-rear direction and an up-down direction of the combination light at a back of the cover section, respectively, wherein the reflector section comprises a surface that opposes the main-lamp-body light sources and the left and right auxiliary-lamp-body light sources.

JP 2009 - 046 087 A discloses a similar headlamp.

### Summary of Invention

In JP 2004 - 322 827 A, the main lamp body and the left and right auxiliary lamp bodies that are housed in a single housing are partitioned by a reflector, and irradiations forwards from the main lamp body and the left and right auxiliary lamp bodies are separated, so that a function of each of the lamp bodies is established, while visibility is secured. However, the light-emitting light sources (bulbs) of the main lamp body and the left and right auxiliary lamp bodies are each housed in the housing so as to oppose a lens in front. Therefore, the light sources are each exposed to outside via the lens, and visibility is difficult to secure. Moreover, since each of the bulbs is provided with a socket, a place of electrical connection to each of the bulbs must be installed in the housing.

Accordingly, the present invention has an object of providing a combination light in which visibility can be improved by avoiding exposure of a light source, and electrical connection to the light source can be performed by a simple structure.

The present invention is a combination light for a saddle-type vehicle including a main lamp body and auxiliary lamp bodies disposed to left and right of the main lamp body, and has the following features.

First Feature: The main lamp body includes a plurality of main-lamp-body light sources which are configured to emit a light that is irradiated outside, and the left and right auxiliary lamp bodies each include an auxiliary-lamp-body light source which is configured to emit a light that is irradiated outside. In addition, the combination light further includes: a housing that houses the main-lamp-body light sources and the left and right auxiliary-lamp-body light sources; a reflector section that is housed in the housing and forwardly reflects each of the lights that have been emitted from the main-lamp-body light sources and the left and right auxiliary-lamp-body light sources; a lens section that is attached to a front of the housing and allows each of the lights that have been reflected by the reflector section to be forwardly transmitted; a cover section that is nontransparent or has low transparency with respect to each of the lights that have been reflected by the reflector section, and comprising two partitioning sections that partition the lens section into: a main-lamp-body lamplight surface by which the light of the main-lamp-body light sources is forwardly irradiated from a central portion of the lens section; and left and right auxiliary-lamp-body lamplight surfaces by which the lights of the left and right auxiliary-lamp-body light sources are forwardly irradiated from both left and right parts of the lens section; and two substrates that are housed in the housing and extend out in a front-rear direction of the combination light at a back of the cover section, respectively, such that the two substrates are respectively arranged on the backs of the two partitioning sections. In this case, the main-lamp-body light sources and the left and right auxiliary-lamp-body light sources are positioned on the back of the cover section, and the reflector section includes a surface that opposes the main-lamp-body light sources and the left and right auxiliary-lamp-body light sources. The main-lamp-body light sources and the left and right auxiliary-lamp-body light sources are LED light sources, and are arranged on surfaces of the substrates lying along the front-rear direction.

Second Feature: The main-lamp-body light sources are arranged on the surfaces of the substrates oriented in a central direction of the combination light orthogonal to the front-rear direction. Furthermore, the left and right auxiliary-lamp-body light sources are arranged on the surfaces of the substrates and oriented in outward directions of the combination light orthogonal to the front-rear direction.

Third Feature: As mentioned, the substrates are each arranged on a back of the partitioning sections in the cover section, partitioning the main-lamp-body lamplight surface and the left and right auxiliary-lamp-body lamplight surfaces. In this case, the main-lamp-body light sources are arranged on the surfaces on sides of the left and right substrates in the central direction, and the auxiliary-lamp-body light sources are arranged on the surfaces on sides of the left and right substrates in the outward directions.

Fourth Feature: The main-lamp-body light source and the auxiliary-lamp-body light source disposed on the same substrate are disposed so as not to overlap each other in side view.

Fifth Feature: When a plurality of the main-lamp-body light sources are disposed on the same substrate, the plurality of main-lamp-body light sources are an LED light source for low-beam and an LED light source for high-beam, and are disposed on the same surface of the substrate.

Sixth Feature: The reflector section includes: a main-lamp-body reflector that forwardly reflects the light that has been emitted from the main-lamp-body light sources; and left and right auxiliary-lamp-body reflectors that forwardly reflect the lights that have been emitted from the left and right auxiliary-lamp-body light sources. In this case, the main-lamp-body reflector has a convex shape projecting more forwardly as the shape approaches in the central direction.

Seventh Feature: The main lamp body is a headlight, and the left and right auxiliary lamp bodies are blinkers or position lights.

Eighth Feature: The cover section is part of an exterior component covering the combination light.

Due to the first feature of the present invention, the main-lamp-body light sources and the left and right auxiliary-lamp-body light sources can be easily concealed from outside by the cover section. Moreover, by concentratedly disposing the main-lamp-body light sources and the left and right auxiliary-lamp-body light sources on the back of the cover section, electrical connecting sections to the main-lamp-body light sources and the left and right auxiliary-lamp-body light sources can be aggregated. Hence, in the first feature, it becomes possible for visibility of the combination light to be improved by avoiding exposure of each of the light sources, and for electrical connection to each of the light sources to be performed by a simple structure. By arranging each of the LED light sources on the substrate disposed at the back of the cover section, it becomes possible for a more compact layout to be realized.

Due to the third feature of the present invention, an electrical connecting portion to the main-lamp-body light sources and the left and right auxiliary-lamp-body light sources can be made even more compact.

Due to the fourth feature of the present invention, electrical connection to each of the LED light sources on the substrate and a routing space of wirings to each of the LED light sources can be easily secured.

Due to the fifth feature of the present invention, the LED light source for low-beam and the LED light source for high-beam can be compactly laid out on one surface of the substrate.

Due to the sixth feature of the present invention, it becomes possible for the light that has been emitted from the main-lamp-body light sources to be forwardly reflected by the reflector for main lamp body and to be irradiated forwardly.

Due to the seventh feature of the present invention, the combination light can be used as a combination light for vehicle.

Due to the eighth feature of the present invention, the combination light can be suitably installed in a vehicle.

### Brief Description of Drawings

FIG. 1 is a right side view of a motorcycle in which a combination light according to the present embodiment is installed;
FIG. 2 is a front view of the combination light of FIG. 1;
FIG. 3 is a cross-sectional view taken along the line III-III of FIG. 2;
FIG. 4 is a side view of a substrate;
FIG. 5 is a conceptual diagram illustrating emission directions of lights from each of light sources;
FIG. 6 is a conceptual diagram illustrating one example of irradiation lights of the combination light;
FIG. 7 is a front view showing a modified example of the combination light;
FIG. 8 is a cross-sectional view taken along the line VIII-VIII of FIG. 7;
FIG. 9 is a cross-sectional view taken along the line IX-IX of FIG. 7, showing another modified example of the combination light;
FIG. 10 is a left side view of the combination light of FIGS. 1 to 6 having been installed in a scooter type motorcycle; and
FIG. 11 is a front view of the motorcycle of FIG. 10.

### Description of Embodiments

A preferred embodiment of a combination light according to the present invention will be presented and described in detail below with reference to the accompanying drawings.

### [Configuration of Motorcycle 12]

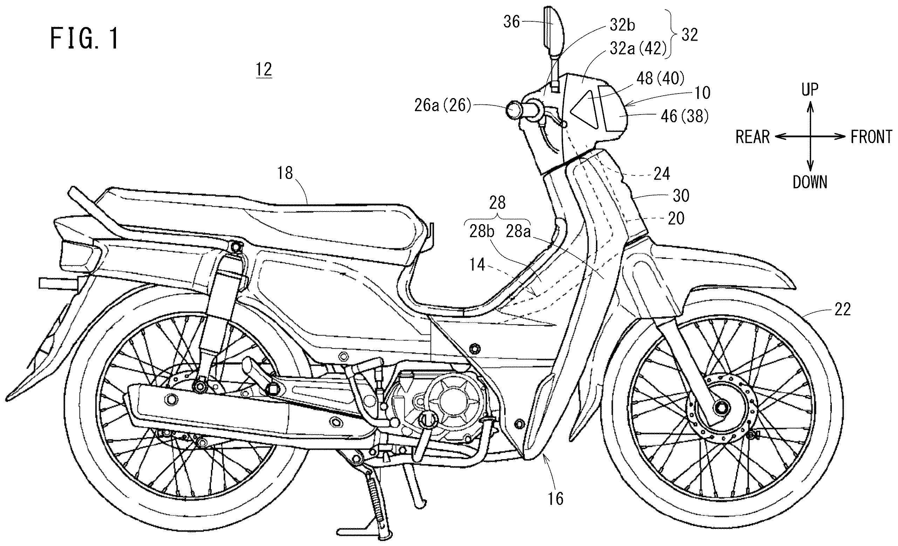

FIG. 1 is a right side view of a motorcycle 12 (a vehicle) being a kind of saddle-type vehicle that has been installed with a combination light 10 according to the present embodiment. The motorcycle 12 includes: a vehicle body frame 14; and a resin-made vehicle body cover 16 that covers the vehicle body frame 14. Note that although in the description below, a cub type motorcycle 12 will be described as an example, the combination light 10 according to the present embodiment is applicable also to various kinds of saddle-type vehicles such as a scooter type, an on-road type, or an off-road type, or to another kind of vehicle besides a saddle-type vehicle. Moreover, in the description below, directions of front-rear, left-right, and up-down will be described according to directions observed by an occupant seated in a seat 18.

The vehicle body frame 14 includes the likes of a steering stem 20 which is provided in a front section of the motorcycle 12. The steering stem 20 functions as a steering shaft for supporting a front wheel 22. A handle post 24 is coupled to an upper section of the steering stem 20. A handle pipe 26 extending in a left-right direction (a vehicle width direction) of the motorcycle 12 is coupled to the handle post 24.

The vehicle body cover 16 includes the likes of: a front cover 28 which is provided forward of the seat 18; a top cover 30 which is provided in front of the front cover 28 and covers the steering stem 20 from in front; and a handle cover 32 that covers the handle pipe 26 from above and below. The front cover 28 includes: a leg shield section 28a by which legs of the occupant seated in the seat 18 are surrounded from in front; and a main cover section 28b that surrounds a forward region of the vehicle body frame 14.

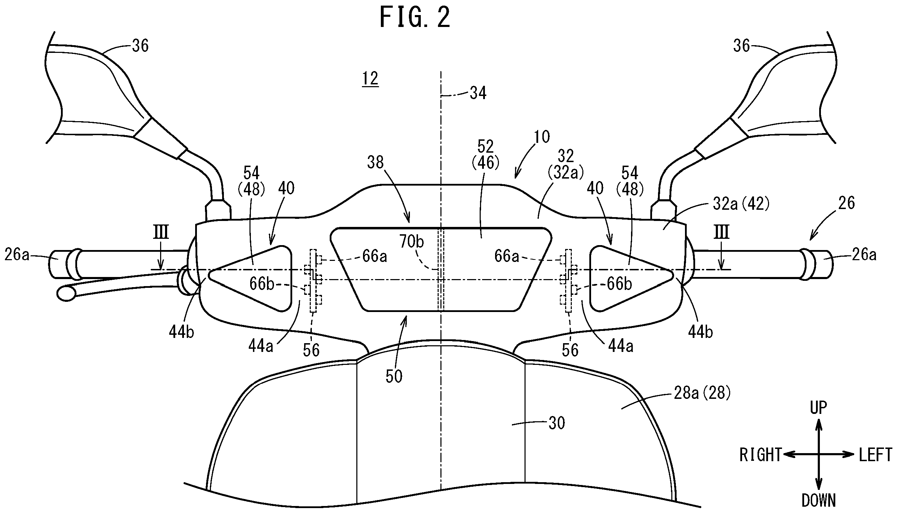

As shown in FIGS. 1 and 2, the handle cover 32 is configured and divided into: a front cover 32a that covers the handle pipe 26 from in front; and a back cover 32b covering the handle pipe 26 from behind, which is fitted to the front cover 32a. To the handle cover 32, the combination light 10 is provided substantially coaxially with a vehicle body center line 34 of the motorcycle 12. As will be mentioned later, the combination light 10 irradiates forward of the motorcycle 12. Note that the handle cover 32 is configured from a resin that is nontransparent or has low transparency with respect to a light irradiated from the combination light 10.

Grip sections 26a being both end sections of the handle pipe 26 extend outwardly in the vehicle width direction (in a leftward direction or a rightward direction) on both left and right sides of the handle cover 32 (the back cover 32b). Moreover, rearview mirrors 36 are attached to both the left and right sides of the back cover 32b.

Note that a structure of the motorcycle 12 is well-known, hence a detailed description thereof will be omitted.

### [Configuration of Combination Light 10]

Next, a configuration of the combination light 10 according to the present embodiment will be described with reference to FIGS. 1 to 5.

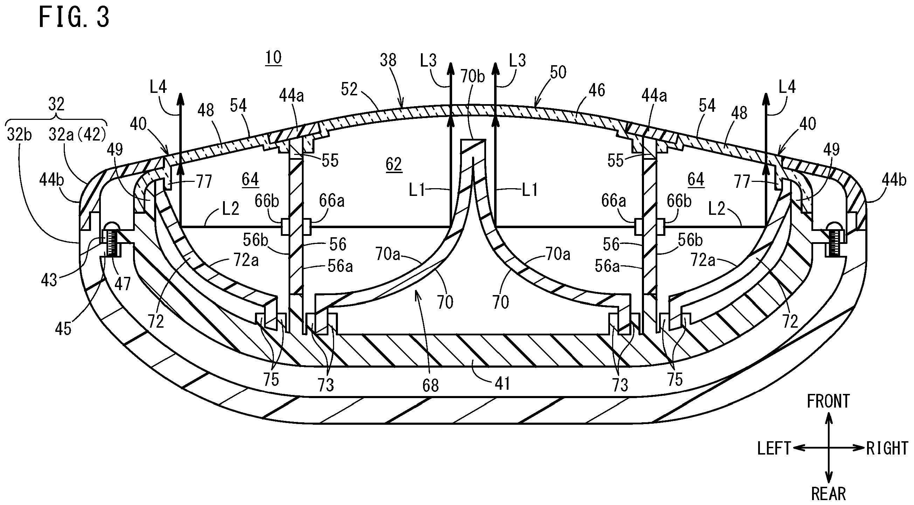

As shown in FIGS. 2 and 3, the combination light 10 is provided to the handle cover 32 so as to be embedded inside the handle cover 32. The combination light 10 includes: a main lamp body 38 that is provided in a central portion in a left-right direction of the handle cover 32, and that irradiates forward of the motorcycle 12; and auxiliary lamp bodies 40 that are respectively provided on both left and right sides of the handle cover 32 (to left and right of the main lamp body 38), and that irradiate ahead. In the present embodiment, the main lamp body 38 is a headlight of the motorcycle 12, while, on the other hand, the left and right auxiliary lamp bodies 40 are blinkers or position lights of the motorcycle 12. Note that in the description below, the case where the left and right auxiliary lamp bodies 40 are blinkers will be described.

As shown in FIG. 3, the combination light 10 is provided in a space within the handle cover 32. Now, it should be noted that the configuration of the combination light 10 will be mainly described in the present embodiment, FIG. 3 is a schematic cross-sectional view omitting illustration of the handle pipe 26, and so on.

The combination light 10 includes: a bowl-shaped housing 41 that is disposed in the space within the handle cover 32 and that opens at the front; and a lens section 50 attached to a front of the housing 41. By the lens section 50 being attached to the housing 41, each of configuring elements of the combination light 10 are housed in a space formed in the combination light 10.

Now, a flange 43 projecting outwardly in the vehicle width direction is formed on both left and right sides of the housing 41, and a flange 45 projecting inwardly in the vehicle width direction is formed on insides of left and right side sections of the back cover 32b. In this case, due to the left and right flanges 43 and the left and right flanges 45 of the back cover 32b being integrally fixed by an attaching member 47 such as a screw in a state of having been overlapped in a front-rear direction, the combination light 10 (the housing 41) is fixedly supported by the back cover 32b.

The back cover 32b opens forwardly, and the front cover 32a covers the back cover 32b and the combination light 10 from in front. In this case, both left and right end sections of the front cover 32a are fitted to both left and right end sections of the back cover 32b. Moreover, in order to forwardly expose the lens section 50 and irradiate a forward area with an irradiation light from the combination light 10, openings are formed in a central portion and both left and right sides, in the front cover 32a, as shown in FIGS. 2 and 3.

The lens section 50 is configured from: a lens 46 for the main lamp body 38; and left and right lenses 48 for the auxiliary lamp bodies 40. In this case, the lens 46 for the main lamp body 38 is exposed from the opening in a center, of the three openings of the front cover 32a, and the lenses 48 for the auxiliary lamp bodies 40 are exposed from the openings on both left and right sides, of the three openings of the front cover 32a. The front cover 32a functions as a cover section 42 partitioning the lens section 50 into the lens 46 in the center and the lenses 48 to left and right, when the lens section 50 is viewed from in front.

In the cover section 42, in order to form the three openings, two portions provided between the lens 46 for the main lamp body 38 and the left and right lenses 48 for the auxiliary lamp bodies 40 are formed as partitioning sections 44a partitioning the lens 46 and the left and right lenses 48, close to the vehicle body center line 34. Moreover, in the cover section 42, portions outward in the vehicle width direction with respect to the left and right lenses 48 being both end sections of the cover section 42 (the front cover 32a), are formed as two coupling sections 44b for coupling to the back cover 32b.

Now, details of layout of the cover section 42 and the lens section 50 will be described. Both ends in the left-right direction (the vehicle width direction) in the lens 46 for the main lamp body 38 are positioned on backs of the two partitioning sections 44a close to the vehicle body center line 34, and are supported by wall sections 55 extending out forwardly from the housing 41. On the other hand, the left and right lenses 48 for the auxiliary lamp bodies 40 respectively have their both ends in the vehicle width direction positioned at the partitioning sections 44a close to the vehicle body center line 34, and are each supported by the wall section 55 extending out forwardly from the housing 41, and by an end section 49 of the housing 41.

Hence, in front view of FIG. 2, a space between the two partitioning sections 44a close to the vehicle body center line 34 represents a region of the main lamp body 38, while, on the other hand, spaces between the coupling sections 44b and partitioning sections 44a on both left and right sides represent regions of the left and right auxiliary lamp bodies 40. Moreover, in FIGS. 2 and 3, when the combination light 10 is viewed from in front, a region not covered with the two partitioning sections 44a on both sides, of the lens 46 for the main lamp body 38 is formed as a main-lamp-body lamplight surface 52 that allows a light L1 forwardly irradiated from the main lamp body 38 to be transmitted. Moreover, regions not covered with the partitioning sections 44a or the coupling sections 44b, of the left and right lenses 48 for auxiliary lamp bodies 40 are formed as auxiliary-lamp-body lamplight surfaces 54 that allow lights forwardly irradiated from the auxiliary lamp bodies 40 to be transmitted.

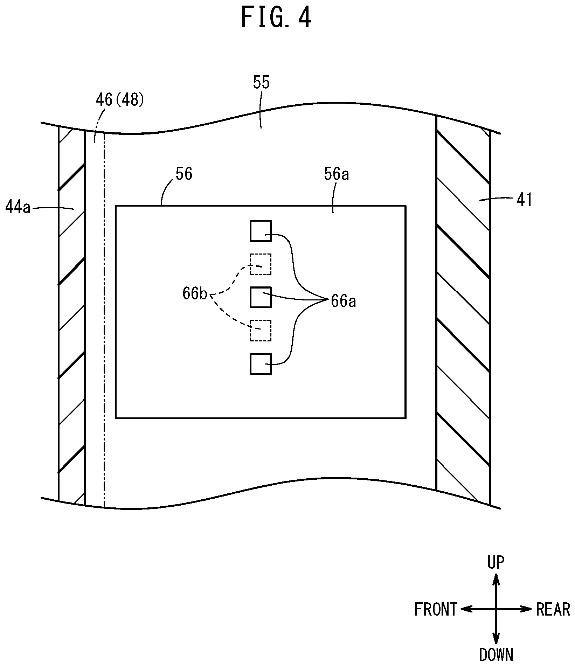

As shown in FIGS. 3 and 4, in the combination light 10, the wall sections 55 extending out forwardly from an inner surface of the housing 41 are respectively provided rearward of the partitioning sections 44a. Hence, the two wall sections 55 are configured integrally with the housing 41. Note that the lenses 46, 48 are supported by front end sections of the two wall sections 55 and the left and right end sections 49 of the housing 41.

Openings oriented in the vehicle width direction are formed in the two wall sections 55. Substrates 56 are respectively disposed in the two wall sections 55 so as to be fitted into the openings. Hence, the two substrates 56 are housed in the combination light 10 by being respectively disposed in the wall sections 55 so as to extend out in the front-rear direction. Note that as a fixing method of the substrates 56 to the two wall sections 55, there may be adopted a variety of fixing methods, such as fitting, screwing, gluing, and so on, of the substrates 56 into unillustrated slits formed in the wall sections 55.

Due to these two wall sections 55 and the two substrates 56, a space within the combination light 10 is partitioned into: a wide space 62 at the center; and narrow spaces 64 on both left and right sides. The wide space 62 at the center represents a spatial region of the main lamp body 38 corresponding to the lens 46 for the main lamp body 38. The narrow spaces 64 to left and right represent spatial regions of the auxiliary lamp bodies 40 corresponding to the lenses 48 for the auxiliary lamp bodies 40.

As shown in FIGS. 3 and 4, a plurality of light sources 66a, 66b are disposed at certain intervals along an up-down direction in a central portion in the front-rear direction in the two substrates 56. In the present embodiment, each of the light sources 66a, 66b is desirably an LED light source.

In this case, three light sources 66a (main-lamp-body light sources) for the main lamp body 38 are disposed side-by-side along the up-down direction on a surface 56a on a main lamp body 38 side (a surface on an inside in the vehicle width direction) in each of the two substrates 56. The light sources 66a for the main lamp body 38 are disposed on the surfaces 56a on the main lamp body 38 side in each of the two substrates 56, so as to face each other along the left-right direction. On the other hand, two light sources 66b (auxiliary-lamp-body light sources) for the auxiliary lamp body 40 are disposed side-by-side along the up-down direction on a surface 56b on an auxiliary lamp body 40 side (a surface on an outside in the vehicle width direction) in each of the two substrates 56.

Moreover, in the same substrate 56, the light sources 66a, 66b for the main lamp body 38 and for the auxiliary lamp bodies 40 are each disposed so as not to overlap each other in side view of FIG. 4. Moreover, as shown in FIG. 3, the light sources 66a, 66b are each disposed on the surfaces 56a, 56b of the substrates 56, in such a manner that the light sources 66a, 66b emit the lights L1, L2 in a direction of separating from the surfaces 56a, 56b of the substrates 56 where the light sources 66a, 66b are disposed, specifically, toward a reflector section 68 disposed in the spatial regions (the spaces 62, 64) where the light sources 66a, 66b are housed.

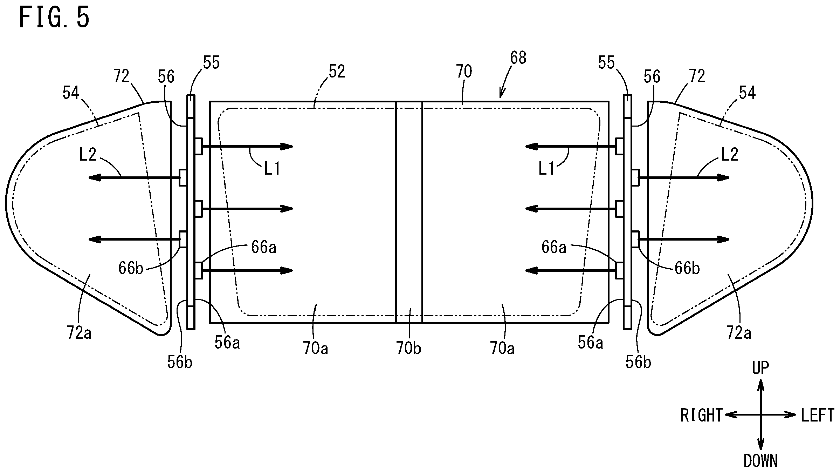

Of the three light sources 66a for the main lamp body 38 disposed in the up-down direction on the same surface 56a of the substrate 56, the upper side two light sources 66a may be LED light sources for low-beam, and the lower side one light source 66a may be an LED light source for high-beam, for example. Note that the number or layout order of the LED light sources for low-beam and the LED light sources for high-beam may be appropriately set according to specifications of the combination light 10. Moreover, as shown in FIGS. 3 and 5, the substrates 56 and the light sources 66a, 66b are each disposed on the backs of the two partitioning sections 44a close to the vehicle body center line 34, so as to be unable to be visually recognized from the front.

Moreover, a reflector 70 for the main lamp body 38 is disposed in the space 62 at the center. On the other hand, a reflector 72 for the auxiliary lamp body 40 is disposed in each of the spaces 64 to left and right. The reflector 70 for the main lamp body 38 is a reflector by which the lights L1 that have been emitted inwardly in the vehicle width direction from each of the light sources 66a for the main lamp body 38 are forwardly reflected.

Specifically, the reflector 70 for the main lamp body 38 includes a reflecting surface 70a opposing each of the light sources 66a for the main lamp body 38, and has a convex shape (a λ shape) projecting more forwardly as the shape approaches to the vehicle body center line 34 (the center of the combination light 10) in cross-sectional view of FIG. 3. Hence, a central portion of the reflector 70 is formed as a front end section 70b that projects convexly forwardly and extends in the up-down direction substantially coaxially with the vehicle body center line 34.

Note that the front end section 70b may be extended out up to the lens 46, although this is not illustrated. Moreover, the reflector 70 is supported by the housing 41, and a variety of fixing methods, such as screwing, gluing, engaging, and so on, may be adopted therefor. In the present embodiment, both left and right end sections of the reflector 70 are each sandwiched and held by two projections 73 projecting forwardly from the inner surface of the housing 41, in vicinities of rear end sections of the wall sections 55.

On the other hand, the left and right reflectors 72 for the auxiliary lamp bodies 40 are each a reflector by which the light L2 that has been emitted outwardly in the vehicle width direction from each of the light sources 66b for the auxiliary lamp bodies 40 disposed in the spaces 64 housing the reflectors, are forwardly reflected. Specifically, the left and right reflectors 72 for the auxiliary lamp bodies 40 each include a reflecting surface 72a opposing each of the light sources 66b for the auxiliary lamp body 40, and are formed with a circular arc-shaped cross section following a shape of the housing 41 in cross-sectional view of FIG. 3.

Note that the left and right reflectors 72 are supported by the housing 41, and a variety of fixing methods, such as screwing, gluing, engaging, and so on, may be adopted therefor. In the present embodiment, rear end sections of the left and right reflectors 72 are each sandwiched and held by two projections 75 projecting forwardly from the inner surface of the housing 41, in vicinities of rear end sections of the wall sections 55. Moreover, front end sections of the left and right reflectors 72 are each sandwiched and held by the end section 49 of the housing 41 and a projection 77 projecting rearwardly from an end section on the outside in the vehicle width direction of the lens 48.

The reflector section 68 of the combination light 10 is configured by these reflectors 70, 72. Hence, when the inside of the combination light 10 is viewed from in front via each of the lenses 46, it is only possible for each of the reflectors 70, 72 to be visually recognized.

### [Operation of Combination Light 10]

Operation of the combination light 10 according to the present embodiment configured as above will be described with reference to FIGS. 3, 5, and 6.

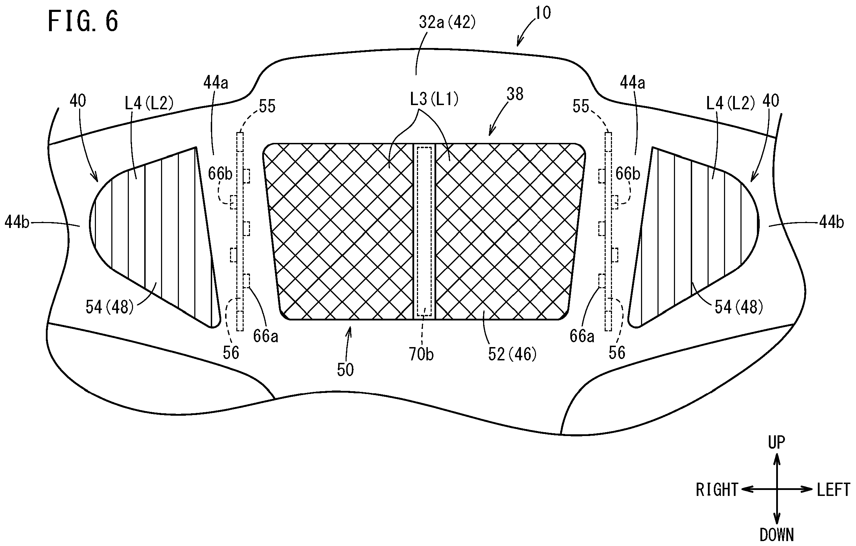

First, as shown in FIGS. 3 and 5, when the lights L1 (low-beam or high-beam lights) have been emitted inwardly in the vehicle width direction from each of the light sources 66a for the main lamp body 38, the emitted lights L1 are each forwardly reflected by the reflecting surface 70a of the reflector 70 for the main lamp body 38 opposing each of the light sources 66a. The reflected lights L1 are each transmitted through the main-lamp-body lamplight surface 52 of the lens 46 to be forwardly irradiated as an irradiation light L3 (low-beam or high-beam) of the main lamp body 38. As previously mentioned, when the lens 46 is viewed from in front, only the reflector 70 can be seen, and the reflector 70 has a forwardly projecting convex shape. Therefore, in the case where the irradiation light L3 is irradiated forwardly from the main-lamp-body lamplight surface 52, the front end section 70b of the reflector 70 does not emit light, while, on the other hand, light emissions of substantially trapezoidal shape to both left and right sides centered around the front end section 70b can be visually recognized as the irradiation light L3 when the combination light 10 (the main-lamp-body lamplight surface 52) is viewed from in front of the motorcycle 12 as shown in FIG. 6.

On the other hand, as shown in FIGS. 3 and 5, when the lights L2 have been emitted outwardly in the vehicle width direction from each of the light sources 66b for the auxiliary lamp bodies 40 to left and right, the emitted lights L2 are each forwardly reflected by the reflecting surface 72a of the reflector 72 for the auxiliary lamp body 40 opposing each of the light sources 66b. The reflected lights L2 are transmitted through the auxiliary-lamp-body lamplight surfaces 54 of the left and right lenses 48 to be respectively forwardly irradiated as irradiation lights L4 (lights from blinkers or position lights) of the auxiliary lamp bodies 40. As previously mentioned, when the left and right lenses 48 are viewed from in front, only the reflectors 72 can be seen. Therefore, in the case where the irradiation lights L4 are irradiated forwardly from the left and right auxiliary lamp body lamplight surfaces 54, light emissions of substantially triangular shape to both left and right sides can be visually recognized as the irradiation lights L4 when the combination light 10 (the left and right auxiliary-lamp-body lamplight surfaces 54) is (are) viewed from in front of the motorcycle 12 as shown in FIG. 6.

### [Modified Examples of Combination Light 10]

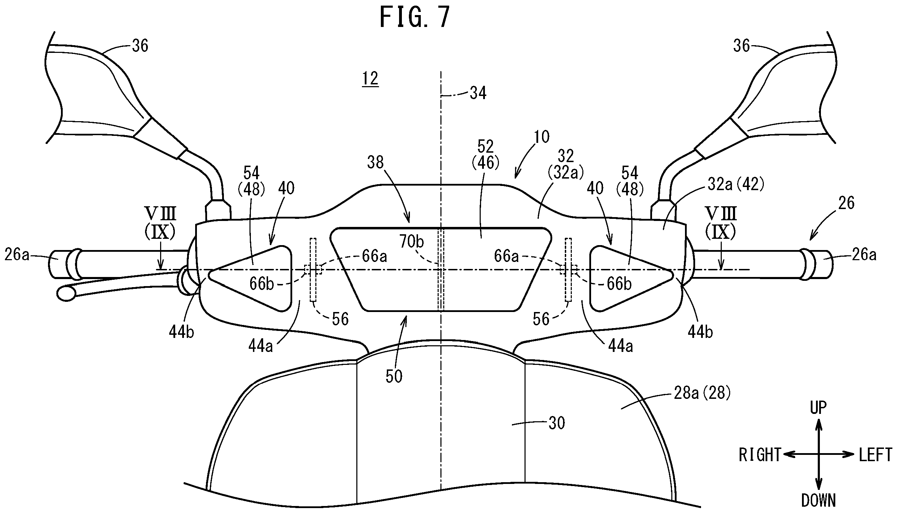

The combination light 10 according to the present embodiment is applicable also to modified examples of FIGS. 7 to 11, instead of the configuration of FIGS. 1 to 6.

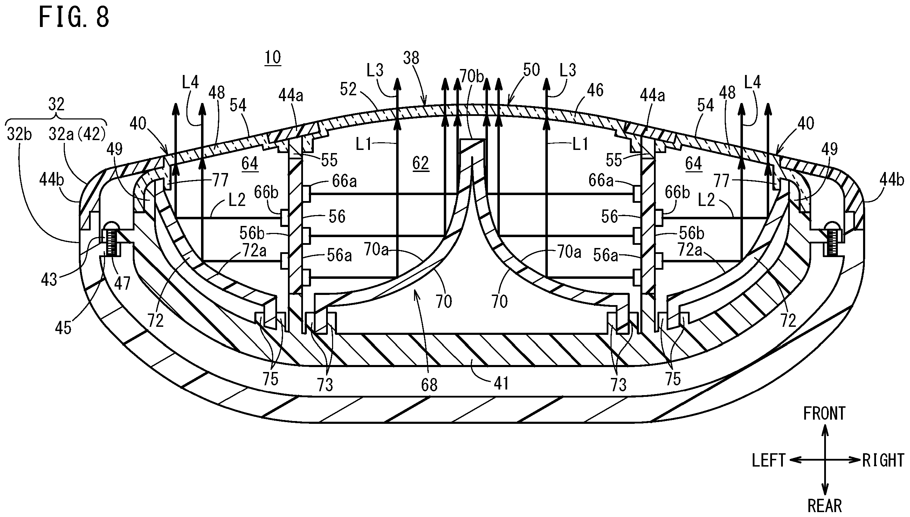

In the modified example of FIGS. 7 and 8, a configuration differs from that of FIGS. 1 to 6 in that the pluralities of light sources 66a, 66b are disposed at certain intervals in the front-rear direction on both surfaces (the surface 56a on the main lamp body 38 side and the surface 56b on the auxiliary lamp body 40 side) of the two substrates 56. In this case too, similarly to in the configuration of FIGS. 1 to 6, the lights L1, L2 from each of the light sources 66a, 66b can be forwardly reflected, and can be forwardly irradiated as the irradiation lights L3, L4 from the main=lamp-body lamplight surface 52 and the left and right auxiliary-lamp-body lamplight surfaces 54.

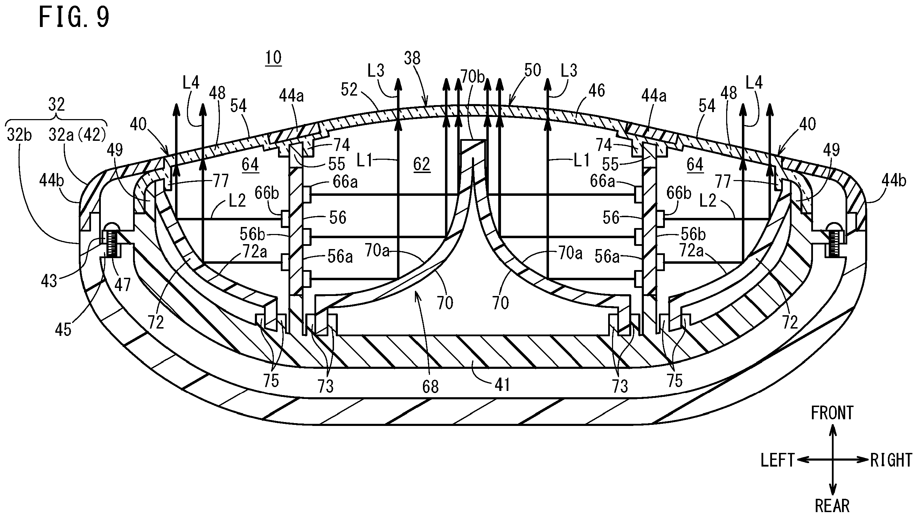

In the modified example of FIG. 9, a configuration differs from that of FIG. 8 in that the lens section 50 is a single lens, and is partitioned into the lens 46 in a central portion thereof and the lenses 48 on both left and right sides thereof, by the two partitioning sections 44a. Therefore, portions at the backs of the two partitioning sections 44a in the lens section 50 are coupled. Moreover, the portions at the backs of the two partitioning sections 44a in the lens section 50 are each provided with two rearwardly projecting projections 74. As a result, the lens section 50 being the single lens is supported by the left and right end sections 49 of the housing 41 and the front end sections of the two wall sections 55. The modified example of FIG. 9 configured in this way also allows similar functions to those of the configuration of FIG. 8 to be performed.

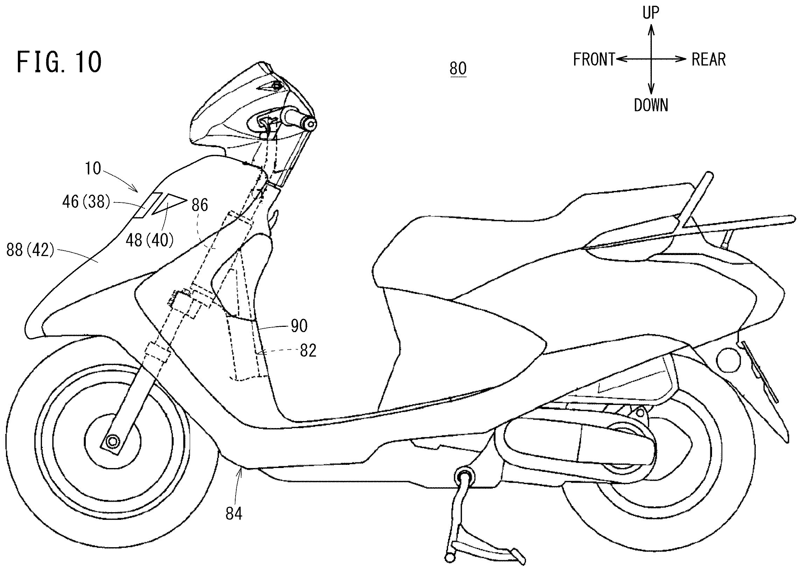

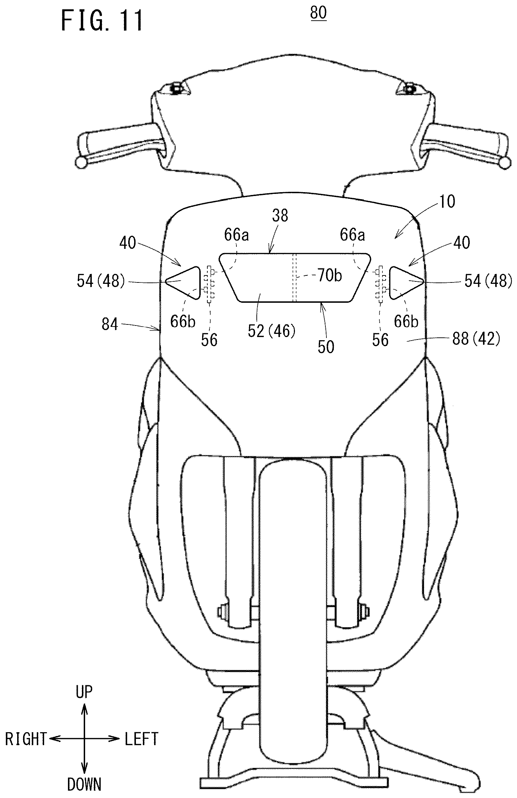

In the modified example of FIGS. 10 and 11, a configuration differs from those of FIGS. 1 to 9 in that the combination light 10 has been installed in a scooter type motorcycle 80. The scooter type motorcycle 80 shown in FIGS. 10 and 11 also includes: a vehicle body frame 82; and a resin-made vehicle body cover 84 that covers the vehicle body frame 82. The vehicle body frame 82 includes a head pipe 86 at its front. The head pipe 86 is covered from in front with a front cover 88 configuring the vehicle body cover 84, and is covered from behind with a center cover 90.

In this case, the combination light 10 is housed in a space formed by the front cover 88 and the center cover 90. In this modified example, the front cover 88 functions as the cover section 42 of the combination light 10. Note that a structure of the scooter type motorcycle 80 is well-known, hence a detailed description thereof will be omitted.

In this modified example too, similarly to the configurations of FIGS. 1 to 9, the lights L1, L2 from each of the light sources 66a, 66b can be forwardly reflected, and can be forwardly irradiated as the irradiation lights L3, L4 from the main=lamp=body lamplight surface 52 and the left and right auxiliary-lamp-body lamplight surfaces 54.

### [Advantages of Present Embodiment]

Advantages of the above-described combination light 10 according to the present embodiment will be described.

Due to the combination light 10 being provided with the cover section 42 (each of the partitioning sections 44a and each of the coupling sections 44b), each of the light sources 66a for the main lamp body 38 and each of the light sources 66b for the auxiliary lamp bodies 40 to left and right can be easily concealed from outside. Moreover, due to each of the light sources 66a, 66b being concentratedly disposed at the back of the partitioning section 44a, electrical connecting sections to each of the light sources 66a, 66b can be aggregated. Hence, in the present embodiment, it becomes possible for visibility of the combination light 10 to be improved by avoiding exposure of each of the light sources 66a, 66b, and for electrical connection to each of the light sources 66a, 66b to be performed by a simple structure.

Moreover, due to the substrates 56 being provided on the backs of the two partitioning sections 44a, and each of the light sources 66a, 66b being arranged on the substrates 56, it becomes possible for a more compact layout to be realized.

Furthermore, the two substrates 56 are respectively arranged on the backs of the two partitioning sections 44a that partition the main-lamp-body lamplight surface 52 and the left and right auxiliary-lamp-body lamplight surfaces 54. In this case, each of the light sources 66a for the main lamp body 38 are arranged on the surfaces 56a on the main lamp body 38 side of the two substrates 56, and on the other hand, each of the light sources 66b for the auxiliary lamp bodies 40 are arranged on the surfaces 56b on the auxiliary lamp body 40 sides to left and right, of the two substrates 56. As a result, electrical connecting portions to each of the light sources 66a, 66b can be made even more compact.

Further still, as shown in FIGS. 4, 5, and 8, each of the light sources 66a for the main lamp body 38 and each of the light sources 66b for the auxiliary lamp bodies 40 disposed on the same substrate 56 are arranged so as not to overlap each other in side view, for example. As a result, in the case where all of the light sources 66a, 66b are LED light sources, electrical connection to each of the LED light sources on the substrate 56 and a routing space of wirings to each of the LED light sources can be easily secured.

In this case, provided the plurality of light sources 66a for the main lamp body 38 are LED light sources for low-beam and LED light sources for high-beam, and are disposed on the same surface of the same substrate 56, the LED light sources can each be compactly laid out.

Moreover, the reflector section 68 includes the reflector 70 for the main lamp body 38 and the left and right reflectors 72 for the auxiliary lamp bodies 40, and the reflector 70 has a convex shape projecting more forwardly as it approaches to the center of the combination light 10 (the vehicle body center line 34), so it becomes possible for the light L1 that has been emitted from each of the light sources 66a for the main lamp body 38 to be forwardly reflected by the reflector 70 and to be irradiated forwardly oriented.

Furthermore, provided the main lamp body 38 is a headlight and the left and right auxiliary lamp bodies 40 are blinkers or position lights, the combination light 10 can be suitably used as a combination light 10 for motorcycle 12.

Further still, since the cover section 42 is part of the handle cover 32 covering the combination light 10, the combination light 10 can be suitably installed in the motorcycle 12.

That concludes description of the present invention using the preferred embodiment. However, the technical range of the present invention is not limited to the range mentioned in the above-described embodiment. Moreover, the symbols in parentheses mentioned in the claims have been assigned in accordance with the symbols in the accompanying drawings in order to facilitate understanding of the present invention, and the present invention should not be interpreted as being limited to elements assigned with those symbols.

## Claims

1. A combination light (10) for a saddle-type vehicle including: a main lamp body (38); and auxiliary lamp bodies (40) disposed to left and right of the main lamp body (38),
the main lamp body (38) including a plurality of main-lamp-body light sources (66a) which are configured to emit a light (L1) that is irradiated outside, and
the left and right auxiliary lamp bodies (40) each including an auxiliary-lamp-body light source (66b) which is configured to emit a light (L2) that is irradiated outside,
the combination light (10) further including:
a housing (41) that houses the main-lamp-body light sources (66a) and the left and right auxiliary-lamp-body light sources (66b);
a reflector section (68) that is housed in the housing (41) and forwardly reflects each of the lights (L1, L2) that have been emitted from the main-lamp-body light sources (66a) and the left and right auxiliary-lamp-body light sources (66b);
a lens section (50) that is attached to a front of the housing (41) and allows each of the lights (L1, L2) that have been reflected by the reflector section (68) to be forwardly transmitted;
a cover section (42) that is nontransparent or has low transparency with respect to each of the lights (L1, L2) that have been reflected by the reflector section (68), and comprising two partitioning sections (44a) that partition the lens section (50) into: a main-lamp-body lamplight surface (52) by which the light (L1) of the main-lamp-body light sources (66a) is forwardly irradiated from a central portion of the lens section (50); and left and right auxiliary-lamp-body lamplight surfaces (54) by which the lights (L2) of the left and right auxiliary-lamp-body light sources (66b) are forwardly irradiated from both left and right parts of the lens section (50); and
two substrates (56) that are housed in the housing (41) and extend out in a front-rear direction of the combination light (10) at a back of the cover section (42), respectively, such that the two substrates (56) are respectively arranged on the backs of the two partitioning sections (44a),
wherein the main-lamp-body light sources (66a) and the left and right auxiliary-lamp-body light sources (66b) are positioned on the back of the cover section (42),
wherein the reflector section (68) comprises a surface (70a, 72a) that opposes the main-lamp-body light sources (66a) and the left and right auxiliary-lamp-body light sources (66b), and
wherein the main-lamp-body light sources (66a) and the left and right auxiliary-lamp-body light sources (66b) are LED light sources, and are arranged on surfaces (56a, 56b) of the substrates (56) lying along the front-rear direction.

2. The combination light (10) for a saddle-type vehicle according to claim 1,
wherein the main-lamp-body light sources (66a) are arranged on the surfaces (56a) of the substrates (56) and oriented in a central direction of the combination light (10) orthogonal to the front-rear direction, and
wherein the left and right auxiliary-lamp-body light sources (66b) are arranged on the surfaces (56b) of the substrates (56) and oriented in outward directions of the combination light (10) orthogonal to the front-rear direction.

3. The combination light (10) for a saddle-type vehicle according to claim 2, wherein the main-lamp-body light sources (66a) are arranged on the surfaces (56a) on sides of the left and right substrates (56) in the central direction, and
wherein the auxiliary-lamp-body light sources (66b) are arranged on the surfaces (56b) on sides of the left and right substrates (56) in the outward directions.

4. The combination light (10) for a saddle-type vehicle according to any one of claims 1 to 3, wherein the main-lamp-body light source (66a) and the auxiliary-lamp-body light source (66b) disposed on the same substrate (56) are disposed so as not to overlap each other in side view.

5. The combination light (10) for a saddle-type vehicle according to any one of claims 1 to 4, wherein when a plurality of the main-lamp-body light sources (66a) are disposed on the same substrate (56), the plurality of main-lamp-body light sources (66a) are an LED light source for low-beam and an LED light source for high-beam, and are disposed on the same surface of the substrate (56).

6. The combination light (10) for a saddle-type vehicle according to any one of claims 1 to 5, wherein the reflector section (68) includes: a main-lamp-body reflector (70) that forwardly reflects the light (L1) that has been emitted from the main-lamp-body light sources (66a); and left and right auxiliary-lamp-body reflectors (72) that forwardly reflect the lights (L2) that have been emitted from the left and right auxiliary-lamp-body light sources (66b), and
wherein the main-lamp-body reflector (70) has a convex shape projecting more forwardly as the shape approaches in the central direction.

7. The combination light (10) for a saddle-type vehicle according to any one of claims 1 to 6, wherein the main lamp body (38) is a headlight, and
wherein the left and right auxiliary lamp bodies (40) are blinkers or position lights.

8. The combination light (10) for a saddle-type vehicle according to any one of claims 1 to 7, wherein the cover section (42) is part of an exterior component (32) covering the combination light (10).

## Patentansprüche

1. Kombinationsleuchte (10) für ein Fahrzeug mit Sattel, die folgendes aufweist: einen Hauptscheinwerferkörper (38); sowie Zusatzscheinwerferkörper (40), die links und rechts des Hauptscheinwerferkörpers (38) angeordnet sind,
wobei der Hauptscheinwerferkörper (38) eine Mehrzahl von Hauptscheinwerferkörper-Lichtquellen (66a) aufweist, die dazu konfiguriert sind, ein Licht (L1) zu emittieren, das nach außen gestrahlt wird, und
wobei der linke und rechte Zusatzscheinwerferkörper (40) jeweils eine Zusatzscheinwerferkörper-Lichtquelle (66b) aufweist, die dazu konfiguriert ist, ein Licht (L2) zu emittieren, das nach außen strahlt,
wobei die Kombinationsleuchte (10) weiterhin folgendes aufweist:
ein Gehäuse (41), das die Hauptscheinwerferkörper-Lichtquellen (66a) und die linken und rechten Zusatzscheinwerferkörper-Lichtquellen (66b) aufnimmt;
einen Reflektorabschnitt (68), der in dem Gehäuse (41) aufgenommen ist und jedes der Lichter (L1, L2), die von den Hauptscheinwerferkörper-Lichtquellen (66a) und den linken und rechten Zusatzscheinwerferkörper-Lichtquellen (66b) emittiert worden sind, nach vorne reflektiert;
einen Linsenabschnitt (50), der an einer Vorderseite des Gehäuses (41) angebracht ist und ermöglicht, dass die Lichter (L1, L2), die von dem Reflektorabschnitt (68) reflektiert worden sind, jeweils nach vorne übertragen werden;
einen Abdeckabschnitt (42), der nicht transparent ist oder eine geringe Transparenz in Bezug auf die jeweiligen Lichter (L1, L2) hat, die von dem Reflektorabschnitt (68) reflektiert worden sind, und der zwei Unterteilungsabschnitte (44a) aufweist, die den Linsenabschnitt (50) unterteilen in: eine Scheinwerferlichtfläche des Hauptscheinwerferkörpers (52), durch die das Licht (L1) der Hauptscheinwerferkörper-Lichtquellen (66a) aus einem Mittelteil des Linsenabschnitts (50) nach vorne gestrahlt wird; sowie Scheinwerferlichtflächen des linken und rechten Zusatzscheinwerferkörpers (54), durch die die Lichter (L2) der linken und rechten Zusatzscheinwerferkörper-Lichtquellen (66b) sowohl aus dem linken als auch dem rechten Teil des Linsenabschnitts (50) nach vorne gestrahlt werden; sowie
zwei Träger (56), die in dem Gehäuse (41) aufgenommen sind und sich in einer Vorne-hinten-Richtung der Kombinationsleuchte (10) jeweils an einer Rückseite des Abdeckabschnitts (42) derart erstrecken, dass die zwei Träger (56) jeweils auf den Rückseiten der zwei Unterteilungsabschnitte (44a) angeordnet sind,
wobei die Hauptscheinwerferkörper-Lichtquellen (66a) und die linken und rechten Zusatzscheinwerferkörper-Lichtquellen (66b) auf der Rückseite des Abdeckabschnitts (42) positioniert sind,
wobei der Reflektorabschnitt (68) eine Oberfläche (70a, 72a) aufweist, die den Hauptscheinwerferkörper-Lichtquellen (66a) und den linken und rechten Zusatzscheinwerferkörper-Lichtquellen (66b) gegenüberliegt, und
wobei die Hauptscheinwerferkörper-Lichtquellen (66a) und die linken und rechten Zusatzscheinwerferkörper-Lichtquellen (66b) LED-Lichtquellen sind, die auf Oberflächen (56a, 56b) der Träger (56) angeordnet sind, welche sich entlang der Vorne-hinten-Richtung befinden.

2. Kombinationsleuchte (10) für ein Fahrzeug mit Sattel nach Anspruch 1,
wobei die Hauptscheinwerferkörper-Lichtquellen (66a) auf den Oberflächen (56a) der Träger (56) angeordnet und in einer zentralen Richtung der Kombinationsleuchte (10) orthogonal zur Vorne-hinten-Richtung ausgerichtet sind, und
wobei die linken und rechten Zusatzscheinwerferkörper-Lichtquellen (66b) auf den Oberflächen (56b) der Träger (56) angeordnet und in Richtungen nach außen der Kombinationsleuchte (10) orthogonal zur Vorne-hinten-Richtung ausgerichtet sind.

3. Kombinationsleuchte (10) für ein Fahrzeug mit Sattel nach Anspruch 2, wobei die Hauptscheinwerferkörper-Lichtquellen (66a) auf den Oberflächen (56a) seitlich des linken und rechten Trägers (56) in zentraler Richtung angeordnet sind, und
wobei die Zusatzscheinwerferkörper-Lichtquellen (66b) auf den Oberflächen (56b) seitlich des linken und rechten Trägers (56) in den Richtungen nach außen angeordnet sind.

4. Kombinationsleuchte (10) für ein Fahrzeug mit Sattel nach einem der Ansprüche 1 bis 3, wobei die Hauptscheinwerferkörper-Lichtquelle (66a) und die auf demselben Träger (56) angeordnete Zusatzscheinwerferkörper-Lichtquelle (66b) derart angeordnet sind, dass sie einander in einer Seitenansicht nicht überlagern.

5. Kombinationsleuchte (10) für ein Fahrzeug mit Sattel nach einem der Ansprüche 1 bis 4, wobei, wenn eine Mehrzahl der Hauptscheinwerferkörper-Lichtquellen (66a) auf demselben Träger (56) angeordnet sind, die Mehrzahl von Hauptscheinwerferkörper-Lichtquellen (66a) aus einer LED-Lichtquelle für das Abblendlicht und einer LED-Lichtquelle für das Fernlicht bestehen und auf derselben Oberfläche des Trägers (56) angeordnet sind.

6. Kombinationsleuchte (10) für ein Fahrzeug mit Sattel nach einem der Ansprüche 1 bis 5, wobei der Reflektorabschnitt (68) folgendes aufweist: einen Hauptscheinwerferkörper-Reflektor (70), der das Licht (L1), das von den Hauptscheinwerferkörper-Lichtquellen (66a) emittiert worden ist, nach vorne reflektiert; sowie linke und rechte Zusatzscheinwerferkörper-Reflektoren (72), die die Lichter (L2), die von den linken und rechten Zusatzscheinwerferkörper-Lichtquellen (66b) emittiert worden sind, nach vorne reflektieren, und
wobei der Hauptscheinwerferkörper-Reflektor (70) eine konvexe Form hat, die mit der Annäherung der Form in der zentralen Richtung weiter nach vorne ragt.

7. Kombinationsleuchte (10) für ein Fahrzeug mit Sattel nach einem der Ansprüche 1 bis 6, wobei der Hauptscheinwerferkörper (38) ein Fahrzeugscheinwerfer ist, und
wobei die linken und rechten Zusatzscheinwerferkörper (40) Blinker oder Positionsleuchten sind.

8. Kombinationsleuchte (10) für ein Fahrzeug mit Sattel nach einem der Ansprüche 1 bis 7, wobei der Abdeckabschnitt (42) Teil einer Außenkomponente (32) ist, welche die Kombinationsleuchte (10) abdeckt.

## Revendications

1. Lumière combinée (10) pour un véhicule de type à selle comportant : un corps de lampe principal (38) ; et des corps de lampe auxiliaires (40) disposés à gauche et à droite du corps de lampe principal (38),
le corps de lampe principal (38) comportant une pluralité de sources de lumière de corps de lampe principal (66a) qui sont configurées pour émettre une lumière (L1) qui est irradiée à l'extérieur, et
les corps de lampe auxiliaires gauche et droit (40) comportant chacun une source de lumière de corps de lampe auxiliaire (66b) qui est configurée pour émettre une lumière (L2) qui est irradiée à l'extérieur,
la lumière combinée (10) comportant en outre :
un boîtier (41) qui reçoit les sources de lumière de corps de lampe principal (66a) et les sources de lumière de corps de lampe auxiliaire gauche et droit (66b) ;
une section de réflecteur (68) qui est reçue dans le boîtier (41) et réfléchit vers l'avant chacune des lumières (L1, L2) qui ont été émises par les sources de lumière de corps de lampe principal (66a) et les sources de lumière de corps de lampe auxiliaire gauche et droit (66b) ;
une section de lentille (50) qui est fixée à une partie avant du boîtier (41) et permet à chacune des lumières (L1, L2) qui ont été réfléchies par la section de réflecteur (68) d'être transmises vers l'avant ;
une section de couvercle (42) qui est non transparente ou a une faible transparence par rapport à chacune des lumières (L1, L2) qui ont été réfléchies par la section de réflecteur (68), et comprenant deux sections de partitionnement (44a) qui partitionnent la section de lentille (50) en : une surface de lumière de lampe de corps de lampe principal (52) par laquelle la lumière (L1) des sources de lumière de corps de lampe principal (66a) est irradiée vers l'avant à partir d'une partie centrale de la section de lentille (50) ; et des surfaces de lumière de lampe de corps de lampe auxiliaire gauche et droit (54) par lesquelles les lumières (L2) des sources de lumière de corps de lampe auxiliaire gauche et droit (66b) sont irradiées vers l'avant à partir des deux parties gauche et droite de la section de lentille (50) ; et
deux substrats (56) qui sont reçus dans le boîtier (41) et s'étendent dans une direction avant-arrière de la lumière combinée (10) à une partie arrière de la section de couvercle (42), respectivement, de sorte que les deux substrats (56) sont agencés respectivement sur les parties arrière des deux sections de partitionnement (44a),
dans laquelle les sources de lumières de corps de lampe principal (66a) et les sources de lumières de corps de lampe auxiliaire gauche et droit (66b) sont positionnées à la partie arrière de la section de couvercle (42),
dans laquelle la section de réflecteur (68) comprend une surface (70a, 72a) qui s'oppose aux sources de lumière du corps de lampe principal (66a) et aux sources de lumière de corps de lampe auxiliaire gauche et droit (66b), et
dans laquelle les sources de lumière de corps de lampe principal (66a) et les sources de lumières de corps de lampe auxiliaire gauche et droit (66b) sont des sources de lumière à LED, et sont agencées sur des surfaces (56a, 56b) des substrats (56) s'étendant le long de la direction avant-arrière.

2. Lumière combinée (10) pour véhicule de type à selle selon la revendication 1,
dans laquelle les sources de lumière de corps de lampe principal (66a) sont agencées sur les surfaces (56a) des substrats (56) et orientées dans une direction centrale de la lumière combinée (10) orthogonale à la direction avant-arrière, et
dans laquelle les sources de lumières de corps de lampe auxiliaire gauche et droit (66b) sont agencées sur les surfaces (56b) des substrats (56) et orientées dans des directions vers l'extérieur de la lumière combinée (10) orthogonales à la direction avant-arrière.

3. Lumière combinée (10) pour un véhicule de type à selle selon la revendication 2, dans laquelle les sources de lumière de corps de lampe principal (66a) sont agencées sur les surfaces (56a) sur des côtés des substrats gauche et droit (56) dans la direction centrale, et
dans laquelle les sources de lumière de corps de lampe auxiliaire (66b) sont agencées sur les surfaces (56b) sur des côtés des substrats gauche et droit (56) dans les directions vers l'extérieur.

4. Lumière combinée (10) pour un véhicule de type à selle selon l'une quelconque des revendications 1 à 3, dans laquelle la source de lumière de corps de lampe principal (66a) et la source de lumière de corps de lampe auxiliaire (66b) disposées sur le même substrat (56) sont disposées de manière à ne pas se chevaucher l'une l'autre en vue de côté.

5. Lumière combinée (10) pour un véhicule de type à selle selon l'une quelconque des revendications 1 à 4, dans laquelle, lorsqu'une pluralité des sources de lumière de corps de lampe principal (66a) sont disposées sur le même substrat (56), la pluralité de sources de lumière de corps de lampe principal (66a) sont une source de lumière à LED pour le feu de croisement et une source de lumière à LED pour le feu de route, et sont disposées sur la même surface du substrat (56).

6. Lumière combinée (10) pour un véhicule de type à selle selon l'une quelconque des revendications 1 à 5, dans laquelle la section de réflecteur (68) comporte : un réflecteur de corps de lampe principal (70) qui réfléchit vers l'avant la lumière (L1) qui a été émise par les sources de lumière de corps de lampe principal (66a) ; et
des réflecteurs de corps de lampe auxiliaire gauche et droit (72) qui réfléchissent vers l'avant les lumières (L2) qui ont été émises par les sources de lumières de corps de lampe auxiliaire gauche et droit (66b), et
dans laquelle le réflecteur de corps de lampe principal (70) a une forme convexe faisant saillie plus vers l'avant lorsque la forme s'approche dans la direction centrale.

7. Lumière combinée (10) pour un véhicule de type à selle selon l'une quelconque des revendications 1 à 6, dans laquelle le corps de lampe principal (38) est un phare, et
dans laquelle les corps de lampe auxiliaire gauche et droit (40) sont des clignotants ou des lumières de position.

8. Lumière combinée (10) pour un véhicule de type à selle selon l'une quelconque des revendications 1 à 7, dans laquelle la section de couvercle (42) fait partie d'un composant extérieur (32) recouvrant la lumière combinée (10).
